# EUROPEAN PATENT APPLICATION

(11) **EP 3 106 719 A1**
(43) Date of publication of application: **21.12.2016**
(21) Application number: 15745834.0
(22) Date of filing: 09.02.2015
(51) Int. Cl.: F16J 15/34

(54) **MECHANICAL TOOL**

(30) Priority: 10.02.2014 JP 2014023378
(71) Applicant: EagleBurgmann Japan Co., Ltd., Tokyo 105-8587 (JP)
(72) Inventor: TAKAHASHI Hidekazu, Tokyo 105-8587 (JP)
(74) Representative: TBK
(86) International application number: PCT/JP2015/053493
(87) International publication number: WO 2015/119270

(57) **Abstract**

A first annular member 210 mounted to a housing 600 and a second annular member 310 mounted to an outer periphery of a rotating shaft 500 are configured to be capable of being fixed to each other by a coupling member 400 such that each of a stationary ring 220 and a rotating ring 320 which is configured annularly by combining a plurality of divided bodies is held between the first annular member 210 and the second annular member 310 in an axial direction in a state in which a sliding sealing surface is formed, and a state in which positioning of the first annular member 210, the stationary ring 220, the rotating ring 320, and the second annular member 310 in the axial direction and positioning of the first annular member 210 and the second annular member 310 in a circumferential direction are completed is maintained.

## Description

### TECHNICAL FIELD

The present invention relates to a mechanical seal.

### BACKGROUND ART

In a mechanical seal, a seal ring as a stationary ring or a rotating ring is divided from the viewpoint of mountability or the like, and there is known a technique for configuring an annular seal ring by combining these divided bodies when the seal ring is mounted to a mounting position. Herein, in many cases, the seal ring in the mechanical seal is formed of ceramic (plastic material) such as SiC or alumina. In these cases, it is not possible to fix the divided bodies to each other by using a fastener such as a bolt. Accordingly, a structure which fixes a plurality of the divided bodies while positioning the plurality of the divided bodies by clamping an outer peripheral surface using a clamping ring or the like in a state in which the plurality of the divided bodies are combined is adopted (see Patent Literature 1).

However, by clamping the outer peripheral surface of the seal ring using the clamping ring or the like, it is possible to increase positioning accuracy of the plurality of the divided bodies in a radial direction, but it is difficult to increase the position accuracy thereof in an axial direction. As a result, there are cases where the divided bodies which are displaced from each other in the axial direction are fixed to each other and sealing performance is thereby reduced.

### CITATION LIST

### PATENT LITERATURE

Patent Literature 1: Japanese Patent Application Laid-open No. 2003-166651

### SUMMARY OF INVENTION

### TECHNICAL PROBLEM

An object of the present invention is to provide the mechanical seal in which the positioning accuracy of a plurality of the divided bodies constituting the seal ring (the stationary ring, the rotating ring) is improved.

### SOLUTION TO PROBLEM

The present invention has adopted the following means in order to solve the above problem.

That is, the mechanical seal of the present invention is a mechanical seal including:
a first annular member mounted to a housing so as to surround a rotating shaft provided to be rotatable with respect to the housing;
a stationary ring configured annularly by combining a plurality of divided bodies and mounted to the first annular member so as to surround the rotating shaft;
a first fixing member clamping outer peripheral surfaces of the plurality of the divided bodies constituting the stationary ring to thereby fix the plurality of the divided bodies;
a second annular member mounted to an outer periphery of the rotating shaft;
a rotating ring configured annularly by combining a plurality of divided bodies and mounted to the second annular member so as to come into intimate contact with the stationary ring in an axial direction and form an annular sliding sealing surface surrounding the rotating shaft; and
a second fixing member clamping outer peripheral surfaces of the plurality of the divided bodies constituting the rotating ring to thereby fix the plurality of the divided bodies,
wherein the first annular member and the second annular member are configured to be capable of being fixed to each other by a coupling member such that the stationary ring and the rotating ring are held between the first annular member and the second annular member in the axial direction in a state in which the sliding sealing surface is formed, and such that a state in which positioning of the first annular member, the stationary ring, the rotating ring, and the second annular member in the axial direction and positioning of the first annular member and the second annular member in a circumferential direction are completed is maintained.

According to the present invention, by fixing the first annular member and the second annular member using the coupling member, the first annular member, the stationary ring, the rotating ring, and the second annular member are held in the state in which they are positioned in the axial direction, and the divided bodies constituting the stationary ring and the rotating ring are also held in a state in which they are positioned in the axial direction. Consequently, by performing mounting of individual constituent members to the housing or the rotating shaft in this state, it becomes possible to easily assemble the individual constituent members of the mechanical seal with high accuracy while preventing positional displacement in the axial direction.

The plurality of the divided bodies constituting the stationary ring are preferably fixed by the first fixing member in a state in which the plurality of the divided bodies constituting the stationary ring are positioned with respect to each other in the axial direction between the first annular member and the rotating ring. Similarly, the mechanical seal according to claim 1 or 2, wherein the plurality of the divided bodies constituting the rotating ring are fixed by the second fixing member in a state in which the plurality of the divided bodies constituting the rotating ring are positioned with respect to each other in the axial direction between the stationary ring and the second annular member.

With this, it is possible to perform fixing of the plurality of the divided bodies constituting the stationary ring and the rotating ring by the fixing members with high accuracy while preventing the positional displacement in the axial direction.

The first annular member, the stationary ring, the rotating ring, and the second annular member are preferably configured such that when they are in a state in which they are not mounted to the housing and the rotating shaft, they are capable of being integrated with each other by the coupling member while maintaining a state in which they are positioned with respect to each other in the axial direction.

With this, it is possible to make the mechanical seal into a cartridge. Consequently, it is possible to improve handling in a mounting operation of the mechanical seal.

The first annular member and the second annular member are preferably fixed to the housing and the rotating shaft, respectively, in a state in which the first annular member, the stationary ring, the rotating ring, and the second annular member are integrated with each other by the coupling member while maintaining the state in which the first annular member, the stationary ring, the rotating ring, and the second annular member are positioned with respect to each other in the axial direction, and
the plurality of the divided bodies of the stationary ring and the plurality of the divided bodies of the rotating ring are preferably fixed by the first fixing member and the second fixing member, respectively, after the first annular member and the second annular member are fixed to the housing and the rotating shaft, respectively, and the coupling member is dismounted

By firstly fixing the first annular member and the second annular member in the state in which the first annular member, the stationary ring, the rotating ring, and the second annular member are integrated with each other by the coupling member, the positioned state of the individual constituent members in the axial direction is maintained even when the coupling member is dismounted. That is, the positioned state of the stationary ring and the rotating ring in the axial direction is maintained between the fixed first annular member and second annular member. Consequently, it becomes possible to perform fixing of the stationary ring and the rotating ring using the fixing members after the coupling member is dismounted, and it is possible to improve workability.

The first annular member, the stationary ring, the rotating ring, and the second annular member are preferably integrated with each other by the coupling member while maintaining the state in which they are positioned with respect to each other in the axial direction, in a state in which the plurality of the divided bodies constituting the stationary ring are temporarily fixed by the first fixing member and the plurality of the divided bodies constituting the rotating ring are temporarily fixed by the second fixing member, and
when the first annular member, the stationary ring, the rotating ring, and the second annular member are in said integrated state, the first annular member and the second annular member are preferably fixed to the housing and the rotating shaft, respectively, and then the plurality of the divided bodies constituting the stationary ring are preferably fixed again by the first fixing member and the plurality of the divided bodies constituting the rotating ring are preferably fixed again by the second fixing member.

By temporarily fixing the plurality of the divided bodies constituting the stationary ring and the rotating ring using their respective fixing members, the integration operation of the first annular member, the stationary ring, the rotating ring, and the second annular member by the coupling member is facilitated.

Respective interfaces of the stationary ring and the rotating ring preferably do not overlap each other when viewed in the axial direction.

When the interfaces of the stationary ring and the rotating ring overlap each other and come into contact with each other in the axial direction at the sliding sealing surface at which the stationary ring and the rotating ring come into contact with each other at the time of the positioning in the axial direction, there is a possibility that the positional displacement occurs in the axial direction between the plurality of the divided bodies. By configuring the mechanical seal such that the interfaces of the stationary ring and the rotating ring do not overlap each other, it is possible to prevent the positional displacement described above.

The coupling member is preferably a bolt, and
one of the first annular member and the second annular member preferably has a through hole or a notch portion into which the bolt can be inserted, and another of the first annular member and the second annular member preferably has a bolt hole into which the bolt can be screwed

According to the above configuration, it is possible to easily perform the positioning of the individual constituent members with respect to each other and the integration thereof by tightening the bolt, i.e., inserting the bolt into the through hole or the notch portion and screwing the bolt into the bolt hole.

The first annular member and the second annular member preferably have a plurality of the through holes or the notch portions, and a plurality of the bolt holes so that the first annular member and the second annular member can be coupled to each other by a plurality of the bolts

By configuring the mechanical seal such that the first annular member, the stationary ring, the rotating ring, and the second annular member can be integrated with each other by the plurality of the bolts, it is possible to enhance the integration of the first annular member, the stationary ring, the rotating ring, and the second annular member.

The stationary ring is preferably configured to be restricted from rotating with respect to the first annular member and the rotating ring is configured to be restricted from rotating with respect to the second annular member at a position where the respective interfaces of the stationary ring and the rotating ring do not overlap each other when viewed in the axial direction, and
the plurality of the through holes or the notch portions, and the plurality of the bolt holes are preferably disposed asymmetrically when viewed in the axial direction.

In the case where the plurality of the bolt holes are arranged symmetrically, for example, it is considered that the disposition of the bolt holes when the respective interfaces of the stationary ring and the rotating ring overlap each other is identical with the disposition of the bolt holes when the respective interfaces thereof do not overlap each other depending on the way of the disposition. In this case, there is a possibility that the first annular member and the second annular member are mounted with the wrong relative positions (relative phases) in the circumferential direction, and the first annular member and the second annular member are mounted in a state in which the interfaces overlap each other. To cope with this, by disposing the plurality of the bolt holes asymmetrically, it is possible to configure the mechanical seal such that the first annular member and the second annular member cannot be mounted unless they are at the correct relative positions to prevent erroneous mounting of the first annular member and the second annular member.

Each of the first fixing member and the second fixing member is preferably a band member capable of clamping the outer peripheral surfaces of the plurality of the divided bodies by reducing a perimeter and winding around an outer peripheral surface of the stationary ring or the rotating ring.

According to the band member mentioned above, it is possible to clamp the outer peripheral surfaces of the plurality of the divided bodies over the entire circumference with a substantially uniform force. Consequently, it is possible to fix the plurality of the divided bodies while preventing a step from being formed between the plurality of the divided bodies.

### ADVANTAGEOUS EFFECTS OF INVENTION

According to the present invention, it is possible to improve the positioning accuracy of the plurality of the divided bodies constituting the seal ring (the stationary ring, the rotating ring).

### BRIEF DESCRIPTION OF DRAWINGS

Fig. 1 is a schematic cross-sectional view of a mechanical seal according to an example of the present invention;
Fig. 2 is a view (plan view) in which a stationary ring in the example of the present invention is viewed in an axial direction;
Fig. 3 is a view (plan view) in which a rotating ring in the example of the present invention is viewed in the axial direction;
Figs. 4A and 4B are views for explaining a configuration of a fixing member in the example of the present invention;
Fig. 5 is a view (plan view) in which a second annular member in the example of the present invention is viewed in the axial direction; and
Fig. 6 is a view (plan view) in which the second annular member in a modification of the example of the present invention is viewed in the axial direction.

### DESCRIPTION OF EMBODIMENTS

Hereinafter, modes for carrying out the present invention will be exemplarily described in detail based on examples thereof with reference to the drawings. However, the dimensions, materials, shapes, relative arrangements and so on of constituent parts described in the examples are not intended to limit the scope of the present invention to these alone in particular unless specifically described.

### (Example)

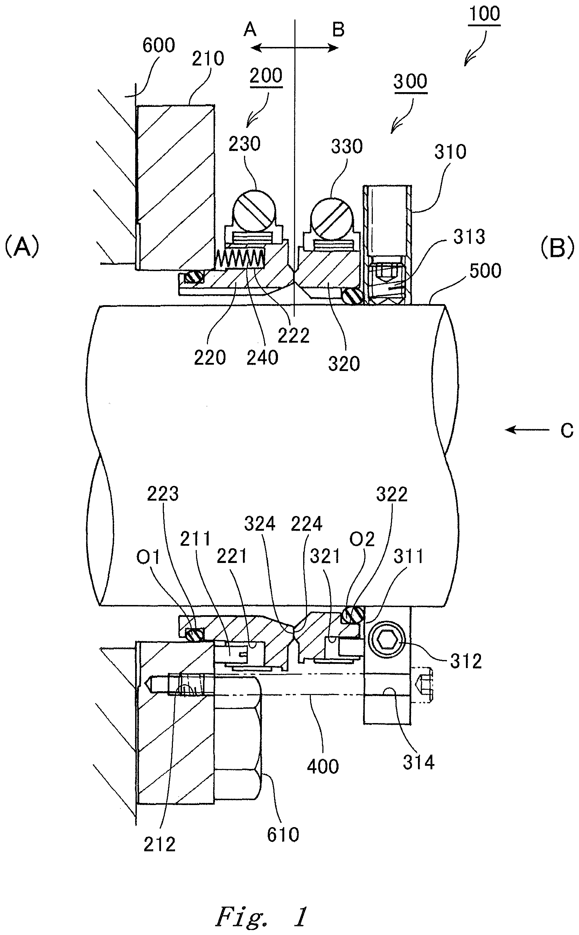

With reference to Figs. 1 to 6, a mechanical seal according to an example of the present invention will be described.

### <Mechanical seal>

With reference to Fig. 1, an overall configuration of the mechanical seal according to the example of the present invention will be described. Fig. 1 is a schematic cross-sectional view showing a mounted state of the mechanical seal according to the example of the present invention. Note that, with regard to the mechanical seal in Fig. 1, a cross section obtained by cutting the mechanical seal with a plane including the center axis of the rotation axis is shown.

A mechanical seal 100 according to the present example is an outside seal which includes a stationary ring unit 200 and a rotating ring unit 300. That is, a sealed fluid on a side of the sealed fluid (A) which is sealed in an annular gap between a rotating shaft 500 and a housing 600 is prevented from leaking from an inner peripheral side to an outer peripheral side (B) by the mechanical seal 100. In addition, the mechanical seal 100 according to the present example is a stationary seal, and an operating portion such as a spring is provided on the side of the stationary ring unit 200.

The stationary ring unit 200 includes a stuffing box 210 as a first annular member mounted to the housing 600, a stationary ring 220 as an annular seal ring, and a hose band 230 as a first fixing member. The stationary ring 220 is divided into a plurality of divided bodies (hereinafter appropriately referred to as divided bodies 220A and 220B). The plurality of the divided bodies 220A and 220B are fixed to each other by clamping outer peripheral surfaces of the plurality of the divided bodies 220A and 220B using the hose band 230. Note that an "axial direction (axis direction)" means an axial direction of the rotating shaft 500. The same applies to the following description.

The stationary ring unit 200 configured in this manner is mounted to the housing 600. That is, the stuffing box 210 is fixed to an end surface around an opening portion of a shaft hole of the housing 600 so as to surround the rotating shaft 500 using a bolt 610, and the stationary ring 220 is mounted to the stuffing box 210 so as to surround the rotating shaft 500.

A pin 211 provided on an end surface of the stuffing box 210 is inserted into a concave portion 221 provided in the stationary ring 220, and the stuffing box 210 and the stationary ring 220 restrict relative movement thereof in a rotation direction (circumferential direction) with an engagement between the pin 211 and the concave portion 221. In addition, the stationary ring 220 is provided with a spring hole 222 to which a spring 240 as a biasing member is mounted. The spring 240 mounted to the spring hole 222 is compressed in the axial direction between a bottom portion of the spring hole 222 and the end surface of the stuffing box 210, and the spring 240 thereby generates a biasing force in the axial direction between the stuffing box 210 and the stationary ring 220. That is, the stationary ring 220 is restricted from moving with respect to the stuffing box 210 in the rotation direction by the pin 211, but is movable in the axial direction. Further, the stationary ring 220 receives an elastic force in a direction away from the stuffing box 210 (direction toward a rotating ring 320) by the spring 240. Note that the number of provided rotation prevention portions each including the pin 211 and the concave portion 221 and the number of provided biasing portions each including the spring hole 222 and the spring 240 are not limited to one, and a plurality of the rotation prevention portions and a plurality of the biasing portions may be provided. With regard to a disposition thereof in that case, they are preferably disposed at regular intervals in the circumferential direction, but the disposition thereof is not particularly limited.

The stationary ring 220 has a cylindrical extended portion which is extended between an outer peripheral surface of the rotating shaft 500 and an inner peripheral surface of the stuffing box 210 opposing the outer peripheral surface of the rotating shaft 500, and an annular groove 223 is formed in an outer periphery of the extended portion. An annular gap between the inner peripheral surface of the stuffing box 210 and an outer peripheral surface of the extended portion of the stationary ring 220 is sealed by an O ring O1 mounted to the annular groove 223.

The rotating ring unit 300 includes a collar 310 as a second annular member fixed to the outer periphery of the rotating shaft 500, a rotating ring 320 as an annular seal ring, and a hose band 330 as a second fixing member. Similarly to the stationary ring 220, the rotating ring 320 is also divided into a plurality of divided bodies (hereinafter appropriately referred to as divided bodies 320A and 320B). The plurality of the divided bodies 320A and 320B are fixed to each other by clamping outer peripheral surfaces of the plurality of the divided bodies 320A and 320B using the hose band 330.

The rotating ring unit 300 configured in this manner is mounted to the rotating shaft 500. That is, the collar 310 is fixed to the outer periphery of the rotating shaft 500, and the rotating ring 320 is mounted so as to surround the outer periphery of the rotating shaft 500 between the collar 310 and the stationary ring 220 of the stationary ring unit 200.

A pin 311 provided on an end surface of the collar 310 is inserted into a concave portion 321 provided in the rotating ring 320, and the collar 310 and the rotating ring 320 restrict relative movement thereof in the rotation direction with an engagement between the pin 311 and the concave portion 321. Note that the number of provided rotation prevention portions each including the pin 311 and the concave portion 321 is not limited to one, and a plurality of the rotation prevention portions may be provided. With regard to a disposition thereof in that case, they are preferably disposed at regular intervals in the circumferential direction, but the disposition thereof is not particularly limited.

The collar 310 is also constituted by two divided bodies, and the two divided bodies are fixed to each other by a bolt 312. With this, the divided bodies are fixed to each other, and the collar 310 is thereby formed. In addition, the collar 310 is fixed to the rotating shaft 500 by a set screw 313. A stepped portion 322 is formed on an inner peripheral side of the rotating ring 320. An O ring 02 is mounted to the stepped portion 322, and an annular gap between the outer peripheral surface of the rotating shaft 500 and an inner peripheral surface of the rotating ring 320 is thereby sealed.

The stationary ring 220 of the stationary ring unit 200 and the rotating ring 320 of the rotating ring unit 300 have annular end surfaces which oppose each other (a sealing end surface 224, a sealing end surface 324), these end surfaces come into contact with each other in the axial direction, and an annular sliding sealing surface is thereby formed. As described above, the stationary ring 220 is biased toward the rotating ring 320 by the spring 240, and hence the sealing end surface 224 of the stationary ring 220 does not move away from the sealing end surface 324 of the rotating ring 320. Each of the sealing end surface 224 of the stationary ring 220 and the sealing end surface 324 of the rotating ring 320 is tapered with approach to its tip.

According to the thus configured mechanical seal 100, the rotating ring unit 300 rotates with the rotation of the rotating shaft 500, and the sealing end surface 324 of the rotating ring 320 and the sealing end surface 224 of the stationary ring 220 slide while maintaining a state in which the sealing end surface 324 and the sealing end surface 224 are in intimate contact with each other. Consequently, it is possible to prevent leakage of the sealed fluid to the outer peripheral side (B).

### <Seal rings (stationary ring and rotating ring)>

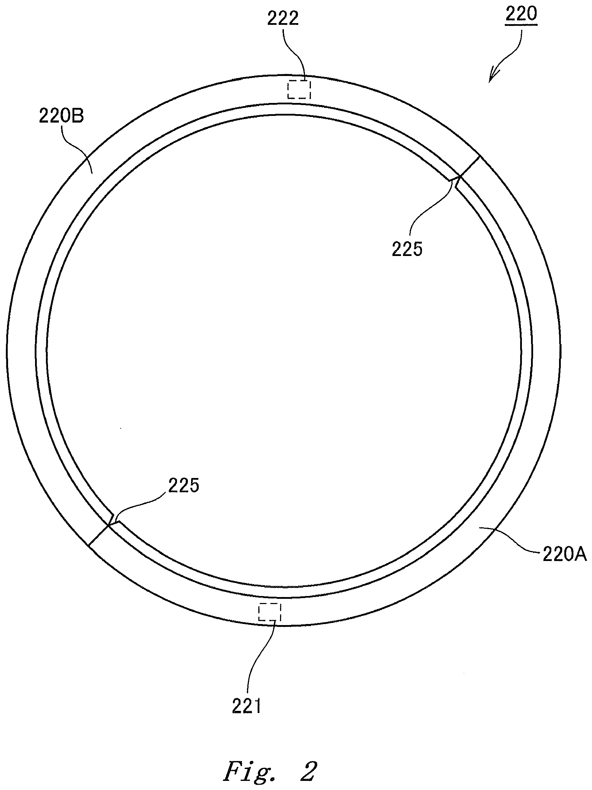

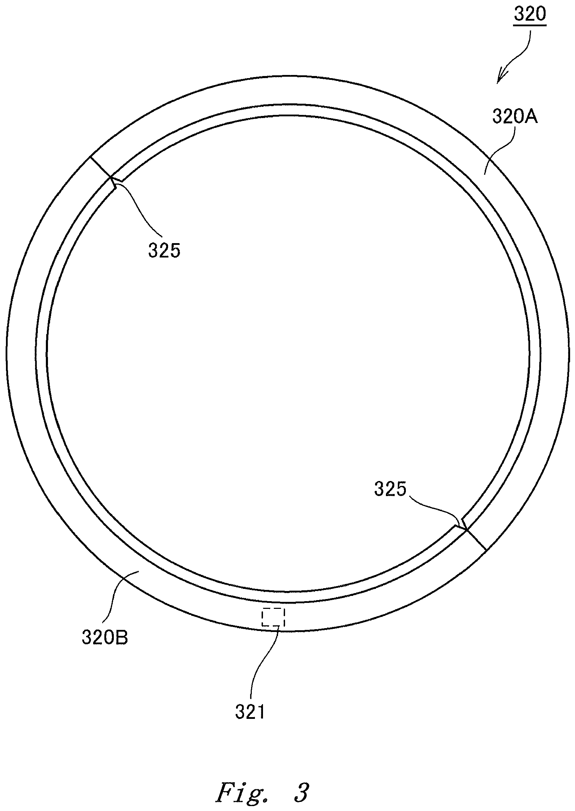

With reference to Figs. 2 and 3, the seal rings (the stationary ring 220 and the rotating ring 320) constituting the mechanical seal 100 according to the present example will be described. Fig. 2 is a schematic plan view in which the stationary ring 220 is viewed in the axial direction, and corresponds to a view in which the stationary ring 220 is viewed in a direction of an arrow A in Fig. 1. Fig. 3 is a schematic plan view in which the rotating ring 320 is viewed in the axial direction, and corresponds to a view in which the rotating ring 320 is viewed in a direction of an arrow B in Fig. 1.

From the viewpoint (necessity) of mountability, each of the stationary ring 220 and the rotating ring 320 has a split-into-two structure in which an annular member is formed by combining two divided bodies. That is, the mechanical seal 100 according to the present example adopts a divided type seal ring in which an annular seal ring is formed by combining a plurality of divided bodies.

Each of the stationary ring 220 and the rotating ring 320 is formed of ceramic (plastic material) such as SiC or alumina. In addition, each of the stationary ring 220 and the rotating ring 320 is constituted by two divided bodies obtained by, e.g., dividing an annular member into two by pulling it (the divided bodies 220A and 220B and the divided bodies 320A and 320B). In the present example, in order to facilitate dividing of the annular member into two, two notches are provided on the inner peripheral sides thereof (notches 225 and notches 325). Consequently, in each of Figs. 2 and 3, by pulling the annular member laterally in a direction orthogonal to an opposing direction of the two notches, a portion provided with each notch is broken, and two divided bodies are obtained.

### <Hose band>

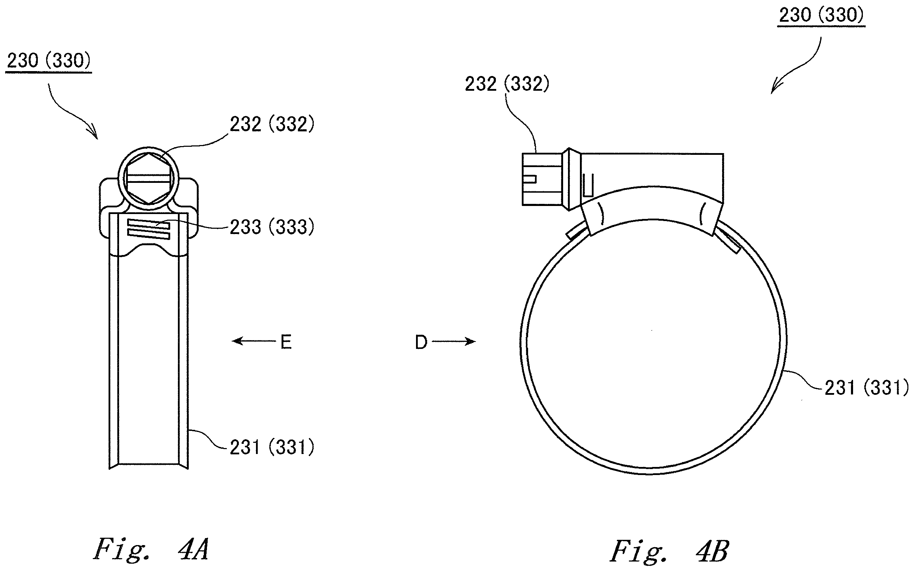

With reference to Figs. 4A and 4B, the hose bands 230 and 330 as the fixing members in the present example will be described. Figs. 4A and 4B are schematic views for explaining the configuration of the hose band, where Fig. 4A is a schematic side view of the hose band and corresponds to a view in which the hose band is viewed in a direction of an arrow D in Fig. 4B, whereas Fig. 4B is a schematic plan view of the hose band and corresponds to a view in which the hose band is viewed in a direction of an arrow E in Fig. 4A. Note that the hose band 230 as the first fixing member and the hose band 330 as the second fixing member have the same configuration, and hence, herein, the hose band 230 will be mainly described.

The hose band 230 (330) is a band member made of metal or resin, and has a belt-like band 231 (331) wound around an outer peripheral surface of the stationary ring 220 (the rotating ring 320), and a clamping bolt 232 (332) for adjusting the perimeter of the band 231. An outer peripheral surface of the annularly wound band 231 is formed with a screw portion (threaded convex portion or concave portion formed on a flat surface) 233 (333) engaged with a screw portion (male screw portion) provided in the clamping bolt 232 which is not shown in the figure. The hose band 230 is configured such that, when the clamping bolt 232 is rotated (tightened), the perimeter of the band 231 is changed (the perimeter is reduced) by the engagement between the screw portion of the clamping bolt 232 and the screw portion 233 of the band 231.

In the stationary ring 220 (the rotating ring 320), the outer peripheral surfaces of the divided body 220A and the divided body 220B are clamped by the hose band 230 (330) configured as described above in a state in which the divided body 220A (320A) and the divided body 220B (320B) are positioned in the axial direction. The hose band 230 is capable of clamping the outer peripheral surface of the stationary ring 220 constituted by the divided body 220A and the divided body 220B over the entire circumference with a substantially uniform clamping force by reducing the perimeter of the band 231 (reducing the diameter thereof) and winding around the outer peripheral surfaces of the divided body 220A and the divided body 220B.

### <Coupling member>

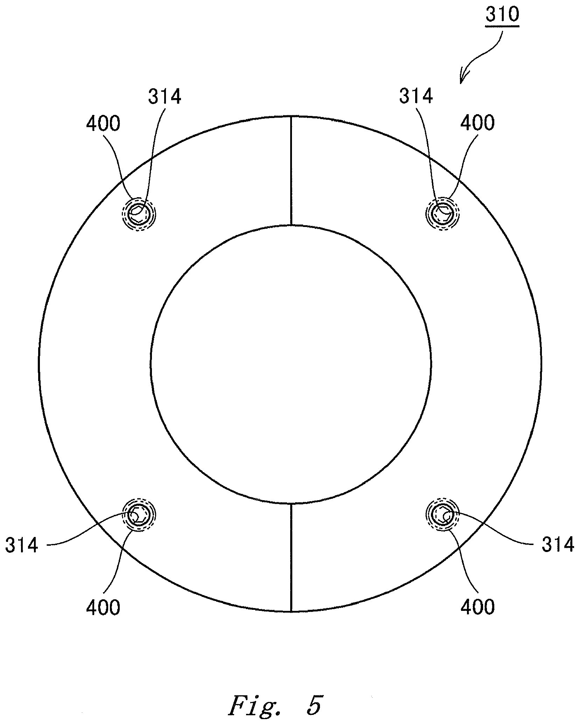

With reference to Figs. 1 and 5, a setting bolt 400 as a coupling member in the present example will be described. Fig. 5 is a schematic plan view in which the collar 310 is viewed in the axial direction, and corresponds to a view in which the collar 310 is viewed in a direction of an arrow C in Fig. 1.

The setting bolt 400 is used for positioning the stuffing box 210, the stationary ring 220, the rotating ring 320, and the collar 310 in the axial direction and maintaining the positioned state when the mechanical seal is assembled. The setting bolt 400 is used only when the mechanical seal is assembled, and is dismounted when the mechanical seal is in use.

The collar 310 is provided with a through hole 314 into which the setting bolt 400 is inserted, and the stuffing box 210 is provided with a bolt hole 212 into which the tip side of the setting bolt 400 is screwed. The setting bolt 400 is inserted into the through hole 314 and the tip side thereof is screwed into the bolt hole 212 in a state in which the spring 240 and the O rings O1 and O2 are mounted to predetermined mounting positions, and the stationary ring 220 and the rotating ring 320 which are temporarily clamped by the hose bands 230 and 330, the stuffing box 210, and the collar 310 are disposed in the axial direction according to the above-described predetermined disposition.

The stuffing box 210 and the collar 310 are fixed to each other by being coupled to each other via the setting bolt 400, and relative movement thereof in the rotation direction (circumferential direction) is restricted. In addition, with regard to the stationary ring 220 and the rotating ring 320 which are prevented from rotating with respect to the stuffing box 210 and the collar 310 by the pins 211 and 311, the relative movement thereof in the rotation direction is also restricted and the stationary ring 220 and the rotating ring 320 are fixed to each other. That is, by mounting the setting bolt 400, relative positions of the stuffing box 210 and the collar 310 in the rotation direction and relative positions of the stationary ring 220 and the rotating ring 320 in the rotation direction are determined.

The stuffing box 210 and the collar 310 are fixed to each other by the setting bolt 400, and the positioned state in the axial direction of the stationary ring 220, the spring 240, the rotating ring 320, and the O rings O1 and O2 which are disposed so as to be held between the stuffing box 210 and the collar 310 is thereby maintained. In addition, by adjusting a screwing amount of the setting bolt 400 against the biasing force of the spring 240, it is possible to adjust the relative positions of the stuffing box 210, the stationary ring 220, the rotating ring 320, and the collar 310 in the axial direction. That is, by mounting the setting bolt 400, the relative positions of the stuffing box 210, the stationary ring 220, the rotating ring 320, and the collar 310 in the axial direction are determined.

That is, the individual members constituting the mechanical seal 100 are concurrently positioned with respect to each other in the axial direction and the rotation direction, and are integrated with each other by tightening the setting bolt 400.

As shown in Fig. 5, the collar 310 is provided with a plurality of the through holes 314, and a plurality of the bolt holes 212 in the stuffing box 210 are provided correspondingly to the plurality of the through holes 314. That is, in the mechanical seal 100 according to the present example, the individual constituent members are positioned with respect to each other and are integrated with each other by a plurality of the setting bolts 400. Note that, as shown in Fig. 5, the disposition of the plurality of the through holes 314 and the bolt holes 212 is preferably a disposition in which they are disposed at regular intervals in the circumferential direction or a disposition symmetric with respect to the center of the rotation axis, but the disposition thereof is not limited thereto. In addition, the number of combinations of the through holes 314 and the bolt holes 212 does not necessarily need to be four, as shown in Fig. 5. That is, the number of setting bolts 400 is not limited to four, as in the present example.

### <Assembly of mechanical seal>

Assembly of the mechanical seal 100 according to the present example is performed by integrating the individual constituent members with each other, i.e., combining the individual constituent members into a cartridge using the setting bolts 400 in advance, and mounting the cartridge to the rotating shaft 500 and the housing 600.

Specifically, first, the divided bodies of the stationary ring 220 and the rotating ring 320 are temporarily clamped (temporarily fixed) by the hose bands 230 and 330, and the stationary ring 220 and the rotating ring 320 are thereby formed. At this point, accuracy in the positioning of the divided bodies with respect to each other in the axial direction and a radial direction may not be high as long as mounting to the other constituent member is not hindered when the constituent members are combined into the cartridge later.

Subsequently, the individual constituent members of the mechanical seal 100 including the stationary ring 220 and the rotating ring 320 temporarily clamped by the hose bands 230 and 330 are combined into the cartridge by mounting the setting bolts 400 in the state in which the individual constituent members are disposed according to the above-described predetermined disposition. At this point, as shown in Figs. 2 and 3, contact surfaces (interfaces) of the respective divided bodies of the stationary ring 220 and the rotating ring 320 are positioned at relative positions (relative phases) in the circumferential direction which do not overlap each other when viewed in the axial direction. In the present example, the interface of the stationary ring 220 and the interface of the rotating ring 320 are disposed at positions which are displaced 90□ with respect to each other when viewed in the axial direction, but the displacement amount is not particularly limited.

Subsequently, the individual constituent members combined into the cartridge are integrally mounted temporarily to predetermined mounting positions in the rotating shaft 500 and the housing 600. Then, in the state in which the setting bolts 400 are mounted (in the cartridge state), the individual constituent members are set at desired positions of the rotating shaft 500 and the housing 600 in the rotation direction (the circumferential direction), and the stuffing box 210 is fixed to the housing 600 by tightening the bolt 610. With this, the positioning of the individual constituent members in the rotation direction (the circumferential direction) with respect to the rotating shaft 500 and the housing 600 is completed.

Subsequently, the screwing amount of the setting bolt 400 is adjusted, and the positioning of the individual constituent members other than the stuffing box 210 in the axial direction with respect to the rotating shaft 500 and the housing 600 is performed. Note that the positioning in the axial direction may be performed in advance before the cartridge is mounted to the rotating shaft 500 and the housing 600, and only the positioning in the rotation direction may be performed after the cartridge is mounted to the rotating shaft 500 and the housing 600.

Then, in the state in which the setting bolts 400 are mounted, the collar 310 is fixed to the rotating shaft 500 by tightening the set screw 313. With this, the mounting of the stuffing box 210 and the collar 310 is completed, and the positioning of the stationary ring 220 and the rotating ring 320 which are held between the stuffing box 210 and the collar 310 and prevented from rotating by the pins 211 and 311 in the axial direction and the rotation direction is completed.

Subsequently, the setting bolts 400 are dismounted from the stuffing box 210 and the collar 310. The divided bodies of the stationary ring 220 and the rotating ring 320 are held between the stuffing box 210 and the collar 310 which are positioned and fixed to each other, and hence positional displacement thereof in the axial direction and the rotation direction is prevented even when the setting bolts 400 are dismounted.

Then, lastly, the hose bands 230 and 330 are tightened again, and the divided bodies of the stationary ring 220 and the rotating ring 320 are completely fixed to each other. The divided bodies combined into the annular shape are clamped over the entire circumference with the substantially uniform clamping force by the hose bands 230 and 330 in a state in which the divided bodies are positioned in the axial direction and the rotation direction. Consequently, it is possible to fix the divided bodies using the hose bands 230 and 330 without causing the positional displacement in the axial direction, the rotation direction, or the radial direction.

With the operations described above, the assembly of the mechanical seal 100 is completed.

### <Advantages of the mechanical seal according to the present example>

According to the present invention, by fixing the stuffing box 210 and the collar 310 to each other using the setting bolt 400, it is possible to hold the stuffing box 210, the stationary ring 220, the rotating ring 320, and the collar 310 in the state in which they are positioned in the axial direction and the rotation direction according to the predetermined disposition at the time of the mounting. Consequently, by performing the mounting of the individual constituent members to the housing 600 or the rotating shaft 500 in this state, it becomes possible to easily assemble the mechanical seal 100 with high accuracy.

In addition, by the fixing using the setting bolt 400, the divided bodies constituting the stationary ring 220 and the rotating ring 320 are held in the state in which they are positioned in the axial direction and the rotation direction. Consequently, by fixing the stationary ring 220 and the rotating ring 320 using the hose bands 230 and 330 in this state, it becomes possible to prevent the positional displacement of the plurality of the divided bodies constituting the stationary ring 220 and the rotating ring 320 in the axial direction and the rotation direction and fix them to each other with high accuracy.

Further, according to the present example, by fixing the stuffing box 210 and the collar 310 to each other using the setting bolt 400, it is possible to integrate the individual constituent members of the mechanical seal 100 (combine them into the cartridge) with each other in a state in which they are not mounted to the rotating shaft 500 or the housing 600. Consequently, handling in the mounting operation of the mechanical seal 100 is improved.

In addition, when the mechanical seal 100 is assembled, by fixing the stuffing box 210 and the collar 310 to the housing 600 or the rotating shaft 500 first in the state in which the individual constituent members are integrated with each other by the setting bolt 400, the positioned state of the individual constituent members in the axial direction and the rotation direction is maintained even when the setting bolt 400 is dismounted. That is, the state in which the stationary ring 220 and the rotating ring 320 are positioned in the axial direction and the rotation direction between the stuffing box 210 and the collar 310 fixed to the housing 600 or the rotating shaft 500 is maintained. Consequently, it becomes possible to perform fixing of the stationary ring 220 and the rotating ring 320 using the setting bolt 400 after the setting bolt 400 is dismounted, the setting bolt 400 no longer hinders the assembly operation, and it is possible to improve workability.

Further, according to the present example, it is possible to easily perform the positioning, fixing, and integration of the individual constituent members only with an operation in which the setting bolt 400 is inserted into the through hole 314 and screwed into the bolt hole 212. Consequently, it is possible to improve the workability of the assembly operation of the mechanical seal 100.

In addition, according to the present example, the stationary ring 220 and the rotating ring 320 are configured so as to be positioned with respect to each other in the state in which the positions (phases) of the interfaces of the stationary ring 220 and the rotating ring 320 in the circumferential direction do not overlap each other when viewed in the axial direction by the mounting of the setting bolt 400. That is, when the interfaces of the stationary ring 220 and the rotating ring 320 overlap each other and come into contact with each other in the axial direction at the sliding sealing surface at the time of the positioning of the individual constituent members in the axial direction, there is a possibility that the positional displacement occurs in the axial direction between the plurality of the divided bodies. As in the present example, by configuring the mechanical seal such that the interfaces of the stationary ring 220 and the rotating ring 320 do not overlap each other, it is possible to prevent the positional displacement described above.

Further, in the present example, the hose band has been used as the fixing member which fixes the plurality of the divided bodies by clamping the outer peripheral surfaces of the plurality of the divided bodies. Thus, by using the hose band as the fixing member, it is possible to clamp the outer peripheral surface of the seal ring constituted by the plurality of the divided bodies over the entire circumference with the substantially uniform clamping force. In addition, in the case of the hose band, it is possible to set a dimension in the radial direction to a value smaller than that of a clamp ring or the like. However, in the present invention, the fixing member described above is not limited to the hose band, and a publically known fixing member such as the clamp ring may also be used.

Thus, according to the present example, it becomes possible to perform both of the positioning of the plurality of the divided bodies in the axial direction and the positioning of the plurality of the divided bodies in the radial direction with high accuracy.

Note that, in the present example, since the seal ring is naturally divided into two, the seal ring has an advantage that the interfaces engage with each other and are unlikely to be displaced from each other. In addition, in the present example, since the mechanical seal 100 is the outside seal, various members constituting the mechanical seal 100 are exposed to an air side. Consequently, it is easy to install (assemble) the mechanical seal 100.

### (Others)

The present example has described the case where the seal ring (the stationary ring 220, the rotating ring 320) is constituted by two divided bodies. However, the present invention can be applied to the case where the seal ring is constituted by three or more divided bodies.

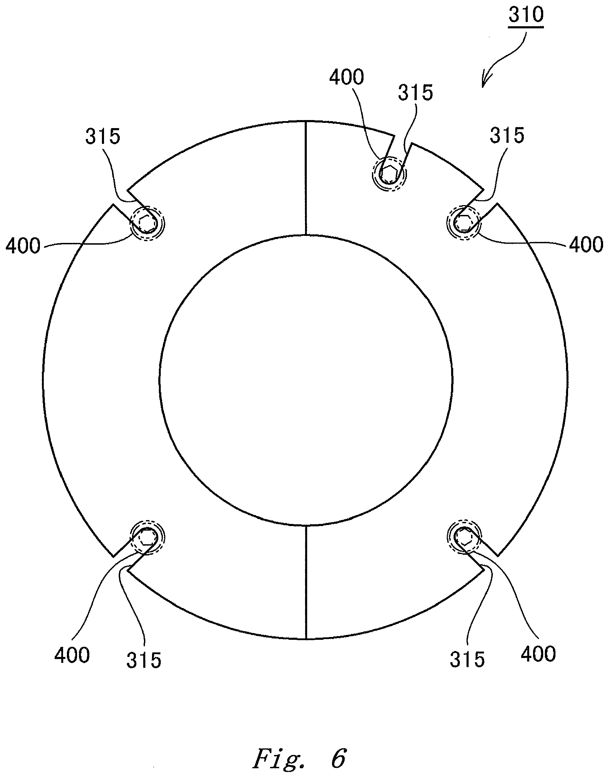

In addition, as a mounting portion of the collar 310 to which the setting bolt 400 is mounted, a notch 315 shown in Fig. 6 may also be used instead of the through hole 314. Fig. 6 is a schematic plan view in which a modification of the collar 310 in the present example is viewed in the axial direction, and corresponds to a view in which the collar 310 is viewed in the direction of the arrow C in Fig. 1.

Further, as shown in Fig. 6, with regard to the disposition of the notches 315 in the circumferential direction, it is preferable to dispose the notches 315 asymmetrically with respect to the center of the rotation axis when viewed in the axial direction, and similarly dispose the bolt holes 212 asymmetrically with respect to the center of the rotation axis. The same applies to the case where the through hole 314 is used. For example, in the case where sets of a plurality of the bolt holes 212 and a plurality of the through holes 314 (the notches 315) are symmetrically disposed, it is considered that the disposition of the bolt holes 212 and the through holes 314 when the respective interfaces of the stationary ring 220 and the rotating ring 320 overlap each other is identical with the disposition of the bolt holes 212 and the through holes 314 when the respective interfaces thereof do not overlap each other depending on the way of the disposition. In this case, it is considered that the stuffing box 210 and the collar 310 are mounted with the wrong relative positions (the phases) of the stuffing box 210 and the collar 310 in the circumferential direction, and the stuffing box 210 and the collar 310 are mounted in the state in which the interfaces overlap each other. To cope with this, by disposing the sets of the plurality of the bolt holes 212 and the plurality of the through holes 314 asymmetrically, it is possible to configure the mechanical seal such that the stuffing box 210 and the collar 310 cannot be mounted unless they are at the correct relative positions to prevent erroneous mounting of the stuffing box 210 and the collar 310. Note that the disposition of the notches 315 shown in Fig. 6 is only an example, and the disposition thereof is not limited thereto.

### REFERENCE SIGNS LIST

- 100:: mechanical seal
- 200:: stationary ring unit
- 210:: stuffing box (first annular member)
- 211:: pin
- 212:: bolt hole
- 220:: stationary ring (seal ring)
- 220A, 220B:: divided body
- 221:: concave portion
- 222:: spring hole
- 223:: annular groove
- 224:: sealing end surface
- 225:: notch
- 230:: hose band (first fixing member)
- 231:: band
- 232:: clamping bolt
- 233:: screw portion
- 240:: spring (biasing member)
- 300:: rotating ring unit
- 310:: collar (second annular member)
- 311:: pin
- 312:: bolt
- 313:: set screw
- 314:: through hole
- 315:: notch
- 320:: rotating ring (seal ring)
- 320A, 320B:: divided body
- 321:: concave portion
- 322:: stepped portion
- 324:: sealing end surface
- 325:: notch
- 330:: hose band (second fixing member)
- 331:: band
- 332:: clamping bolt
- 333:: screw portion
- 400:: setting bolt (coupling member)
- 500:: rotating shaft
- 600:: housing
- 610:: bolt
- O1, O2: O: ring

## Claims

1. A mechanical seal comprising:
a first annular member mounted to a housing so as to surround a rotating shaft provided to be rotatable with respect to the housing;
a stationary ring configured annularly by combining a plurality of divided bodies and mounted to the first annular member so as to surround the rotating shaft;
a first fixing member clamping outer peripheral surfaces of the plurality of the divided bodies constituting the stationary ring to thereby fix the plurality of the divided bodies;
a second annular member mounted to an outer periphery of the rotating shaft;
a rotating ring configured annularly by combining a plurality of divided bodies and mounted to the second annular member so as to come into intimate contact with the stationary ring in an axial direction and form an annular sliding sealing surface surrounding the rotating shaft; and
a second fixing member clamping outer peripheral surfaces of the plurality of the divided bodies constituting the rotating ring to thereby fix the plurality of the divided bodies,
wherein the first annular member and the second annular member are configured to be capable of being fixed to each other by a coupling member such that the stationary ring and the rotating ring are held between the first annular member and the second annular member in the axial direction in a state in which the sliding sealing surface is formed, and such that a state in which positioning of the first annular member, the stationary ring, the rotating ring, and the second annular member in the axial direction and positioning of the first annular member and the second annular member in a circumferential direction are completed is maintained.

2. The mechanical seal according to claim 1, wherein the plurality of the divided bodies constituting the stationary ring are fixed by the first fixing member in a state in which the plurality of the divided bodies constituting the stationary ring are positioned with respect to each other in the axial direction between the first annular member and the rotating ring.

3. The mechanical seal according to claim 1 or 2, wherein the plurality of the divided bodies constituting the rotating ring are fixed by the second fixing member in a state in which the plurality of the divided bodies constituting the rotating ring are positioned with respect to each other in the axial direction between the stationary ring and the second annular member.

4. The mechanical seal according to any one of claims 1 to 3, wherein the first annular member, the stationary ring, the rotating ring, and the second annular member are configured such that when they are in a state in which they are not mounted to the housing and the rotating shaft, they are capable of being integrated with each other by the coupling member while maintaining a state in which they are positioned with respect to each other in the axial direction.

5. The mechanical seal according to any one of claims 1 to 4, wherein the first annular member and the second annular member are fixed to the housing and the rotating shaft, respectively, in a state in which the first annular member, the stationary ring, the rotating ring, and the second annular member are integrated with each other by the coupling member while maintaining the state in which the first annular member, the stationary ring, the rotating ring, and the second annular member are positioned with respect to each other in the axial direction, and
the plurality of the divided bodies of the stationary ring and the plurality of the divided bodies of the rotating ring are fixed by the first fixing member and the second fixing member, respectively, after the first annular member and the second annular member are fixed to the housing and the rotating shaft, respectively, and the coupling member is dismounted.

6. The mechanical seal according to claim 5, wherein the first annular member, the stationary ring, the rotating ring, and the second annular member are integrated with each other by the coupling member while maintaining the state in which they are positioned with respect to each other in the axial direction, in a state in which the plurality of the divided bodies constituting the stationary ring are temporarily fixed by the first fixing member and the plurality of the divided bodies constituting the rotating ring are temporarily fixed by the second fixing member, and
when the first annular member, the stationary ring, the rotating ring, and the second annular member are in said integrated state, the first annular member and the second annular member are fixed to the housing and the rotating shaft, respectively, and then the plurality of the divided bodies constituting the stationary ring are fixed again by the first fixing member and the plurality of the divided bodies constituting the rotating ring are fixed again by the second fixing member.

7. The mechanical seal according to any one of claims 1 to 6, wherein respective interfaces of the stationary ring and the rotating ring do not overlap each other when viewed in the axial direction.

8. The mechanical seal according to any one of claims 1 to 7, wherein the coupling member is a bolt, and
one of the first annular member and the second annular member has a through hole or a notch portion into which the bolt can be inserted, and another of the first annular member and the second annular member has a bolt hole into which the bolt can be screwed.

9. The mechanical seal according to claim 8, wherein the first annular member and the second annular member have a plurality of the through holes or the notch portions, and a plurality of the bolt holes so that the first annular member and the second annular member can be coupled to each other by a plurality of the bolts.

10. The mechanical seal according to claim 9, wherein the stationary ring is configured to be restricted from rotating with respect to the first annular member and the rotating ring is configured to be restricted from rotating with respect to the second annular member at a position where the respective interfaces of the stationary ring and the rotating ring do not overlap each other when viewed in the axial direction, and
the plurality of the through holes or the notch portions, and the plurality of the bolt holes are disposed asymmetrically when viewed in the axial direction.

11. The mechanical seal according to any one of claims 1 to 10, wherein each of the first fixing member and the second fixing member is a band member capable of clamping the outer peripheral surfaces of the plurality of the divided bodies by reducing a perimeter and winding around an outer peripheral surface of the stationary ring or the rotating ring.
